# EUROPEAN PATENT APPLICATION

(11) **EP 3 315 630 A1**
(43) Date of publication of application: **02.05.2018**
(21) Application number: 16814369.1
(22) Date of filing: 21.06.2016
(51) Int. Cl.: C23C 24/04, B21C 37/06, B21C 37/08, B22F 7/04, B23K 9/00, B23K 9/025, B23K 9/23, F16L 9/14

(54) **CLAD PIPE AND METHOD FOR MANUFACTURING CLAD PIPE**

(30) Priority: 23.06.2015 JP 2015125919
(71) Applicant: NHK Spring Co., Ltd., Yokohama-shi, Kanagawa 236-0004 (JP)
(72) Inventor: HIRANO, Satoshi, Isehara-shi Kanagawa 259-1126 (JP)
(74) Representative: Hoffmann Eitle
(86) International application number: PCT/JP2016/068434
(87) International publication number: WO 2016/208599

(57) **Abstract**

Provided is a clad pipe and the like having high levels of adhesion between multiple layers and having durability to last through long-term use, without causing restrictions in terms of combinations of materials of the layers and combinations of thicknesses of the layers. The clad pipe includes: a tubular member 11 formed of a first metal or alloy; an inner circumferential cladding layer 12 that is provided on the inner circumferential surface of the tubular member 11, is formed of a second metal or alloy of a different type from the first metal or alloy, and of which the thickness in the radial direction is at least 50 µm. On the boundary surface between the tubular member 11 and the inner circumferential cladding layer 12, an anchor layer is formed in which the material of one of the two bites into the other.

## Description

### Field

The present invention relates to a clad pipe in which a plurality of types of metal and/or alloy are laminated in the thickness direction and a manufacturing method thereof.

### Background

A clad pipe is known in which a plurality of types of metal and/or alloy are laminated in the thickness direction. Clad pipes are often used in situations where a plurality of characteristics or conditions need to be satisfied such as, for example, durability and anti-corrosion characteristics or decorative quality and a low cost.

Conventionally, metals having anti-corrosion characteristics such as nickel have been used as the materials of pipes through which corrosive gas flows into and out of chambers structuring semiconductor manufacturing devices. However, metals such as nickel is expensive. For this reason, it is useful to use clad pipes obtained by cladding the inner circumferential surface of an inexpensive metal or alloy such as stainless steel with a metal or alloy having anti-corrosion characteristics.

As a technique for cladding the surface of metal, plating methods are known.

Further, Patent Literature 1 discloses a clad pipe manufacturing method by which a steel pipe is inserted into a nickel-based alloy pipe so as to cause a plastic deformation by performing a drawing process, and subsequently, joint faces of the two pipes are arranged to closely adhere to each other by a skew rolling process.

Further, Patent Literature 2 discloses a clad pipe manufacturing method by which a two-layer clad member is produced by rolling and pressure-welding together plate members of metal and/or alloy, and subsequently, the two-layer clad member is processed and formed into a tube shape by using a roll forming machine.

### Citation List

### Patent Literature

Patent Literature 1: Japanese Patent Application Laid-open No. H8-90258
Patent Literature 2: Japanese Patent Application Laid-open No. H6-114571

### Summary

### Technical Problem

However, when a plating method is used, the thickness of a cladding layer realized with a plating process is at most approximately 25 µm or smaller. It is therefore not possible to make the cladding layer very thick. For this reason, a problem arises where the cladding layer easily peels off, and the durability in long-term use is low. In addition, when a plating method is used, because the cladding layer is prone to have pits, another problem arises where erosion may start from the parts having the pits.

Further, in the example disclosed in Patent Literature 1, because bulk members of mutually-different types of metal and/or alloy are joined together, although the plastic deformation is caused by the drawing process and the skew rolling process, there is a limit to the strength of the adhesion between the joined surfaces. In particular, when the thickness of the layer positioned on the inner circumferential side is small, there is a possibility that the layer may peel off when the fluid flowing through the clad pipe flows fast or when the pressure on the inner circumferential side is reduced. For these reasons, the example in Patent Literature 1 also has difficulty in ensuring sufficient durability to last through a long-term use.

Further, in the example disclosed in Patent Literature 2, when the plate members placed on each other are significantly different from each other in mechanical characteristics thereof such as malleability and/or ductility, a large warp may be caused in the two-layer clad member when a rolling process is repeatedly performed for the purpose of enhancing the strength of the adhesion between the plate members. Further, to inhibit the warping, it would be necessary to adjust the thickness of each of the plate members and to increase the number of layers of the plate members placed on one another. As a result, there are restrictions in terms of combinations of materials of the plate members and combinations of thicknesses.

In view of the circumstances described above, it is an object of the present invention to provide a clad pipe and a manufacturing method thereof, the clad pipe having high levels of adhesion between the multiple layers and having durability to last through long-term use, without causing restrictions in terms of combinations of materials of the layers and combinations of thicknesses of the layers.

### Solution to Problem

To solve the above-described problem and achieve the object, a clad pipe according to the present invention includes: a first tubular member formed of first metal or alloy; and a second tubular member provided on an inner circumferential surface of the first tubular member, and formed of a second metal or alloy of a different type from the first metal or alloy, a thickness of the second tubular member in a radial direction being at least 50 µm, wherein on a boundary surface where the first tubular member and the second tubular member are in contact with each other, an anchor layer is formed in which a material of one of the first and the second tubular members digs into a material of another tubular member.

In the above-described clad pipe, a proportion of the thickness of the second tubular member in the radial direction to a thickness of the clad pipe in the radial direction is equal to or smaller than 1/3.

In the above-described clad pipe, the second tubular member is formed by spraying, together with gas, and depositing powder of the material onto the first tubular member while the powder remains in a solid phase state, the first tubular member is provided with a joint part formed of the first metal or alloy and extending in a longitudinal direction, and the second tubular member is provided with a joint part formed of the second metal or alloy and extending in a longitudinal direction.

In the above-described clad pipe, the first tubular member is formed by spraying, together with gas, and depositing powder of the material onto the second tubular member while the powder remains in a solid phase state.

In the above-described clad pipe, a combination of the first metal or alloy and the second metal or alloy is: carbon steel or stainless steel and nickel or nickel alloy; carbon steel or stainless steel and aluminum or aluminum alloy; carbon steel or stainless steel and copper or copper alloy; carbon steel or stainless steel and titanium or titanium alloy; aluminum or aluminum alloy and nickel or nickel alloy; aluminum or aluminum alloy and copper or copper alloy; aluminum or aluminum alloy and titanium or titanium alloy; or copper or copper alloy and titanium or titanium alloy.

A clad pipe manufacturing method according to the present invention includes: a laminated member producing step of producing a plate laminated member by spraying, together with gas, and depositing powder onto a plate base member formed of a first metal or alloy while the powder remains in a solid phase state, the powder being formed of a second metal or alloy of a different type from the first metal or alloy; a tube shape forming step of forming the laminated member into a tube shape; and a joining step of joining, with each other, lateral end faces opposing each other in the laminated member formed into the tube shape.

The above-described clad pipe manufacturing method further includes: a rolling step of performing a rolling process on the plate laminated member, wherein the tube shape forming step forms the plate laminated member on which the rolling process has been performed into the tube shape.

In the above-described clad pipe manufacturing method, the tube shape forming step forms the laminated member such that the base member is positioned on an outside.

In the above-described clad pipe manufacturing method, the tube shape forming step forms the laminated member such that the base member is positioned on an inside.

In the above-described clad pipe manufacturing method, the joining step includes: a first joining step of joining lateral end faces of the base member with each other, by using a filler material formed of the first metal or alloy; and a second joining step of joining, with each other, lateral end faces of a deposited layer that deposited on the base member and is formed of the second metal or alloy, by using a filler material formed of the second metal or alloy.

A clad pipe manufacturing method according to the present invention includes: a laminated member producing step of producing a tubular laminated member by spraying, together with gas, and depositing powder onto an outer circumferential surface of a tubular base member formed of a first metal or alloy while the powder remains in a solid phase state, the powder being formed of a second metal or alloy of a different type from the first metal or alloy; and a drawing step of performing a drawing process on the tubular laminated member.

### Advantageous Effects of Invention

According to the present invention, one of the first and the second tubular members is formed by using a so-called cold spray method, by which the material powder of the one tubular member is sprayed, together with the gas, and deposited onto the other tubular member while the material powder remains in a solid phase state. Accordingly, it is possible to provide a clad pipe having high levels of adhesion between the multiple layers and having durability to last through long-term use, without causing restrictions in terms of combinations of materials of the layers and combinations of thicknesses of the layers. Brief Description of Drawings

FIG. 1 is a perspective view illustrating an external appearance of a clad pipe according to a first embodiment of the present invention.
FIG. 2 is a transversal cross-sectional view of a structure of the clad pipe illustrated in FIG. 1.
FIG. 3 is a flowchart illustrating a method of manufacturing the clad pipe according to the first embodiment of the present invention.
FIG. 4 is a schematic drawing for explaining the method of manufacturing the clad pipe illustrated in FIG. 1.
FIG. 5 is a schematic drawing illustrating an exemplary configuration of a cold spray device.
FIG. 6 is a schematic drawing for explaining the method of manufacturing the clad pipe illustrated in FIG. 1.
FIG. 7 is a schematic drawing for explaining the method of manufacturing the clad pipe illustrated in FIG. 1.
FIG. 8 is a perspective view illustrating a clad pipe according to a modification example of the first embodiment of the present invention.
FIG. 9 is a perspective view illustrating an external appearance of a clad pipe according to a second embodiment of the present invention.
FIG. 10 is a flowchart illustrating a method of manufacturing the clad pipe illustrated in FIG. 9.
FIG. 11 is a schematic drawing for explaining the method of manufacturing the clad pipe illustrated in FIG. 9.
FIG. 12 is another schematic drawing for explaining the method of manufacturing the clad pipe illustrated in FIG. 9.

### Description of Embodiments

Embodiments to carry out the present invention will be explained in detail below, with reference to the drawings. The present invention is not limited by the embodiments described below. Further, the drawings referenced in the explanations below merely illustrate shapes, sizes, and positional relationships in a schematic manner to such an extent that makes the contents of the present invention comprehensible. In other words, the present invention is not limited only to the shapes, the sizes, and the positional relationships illustrated in the drawings.

### (First Embodiment)

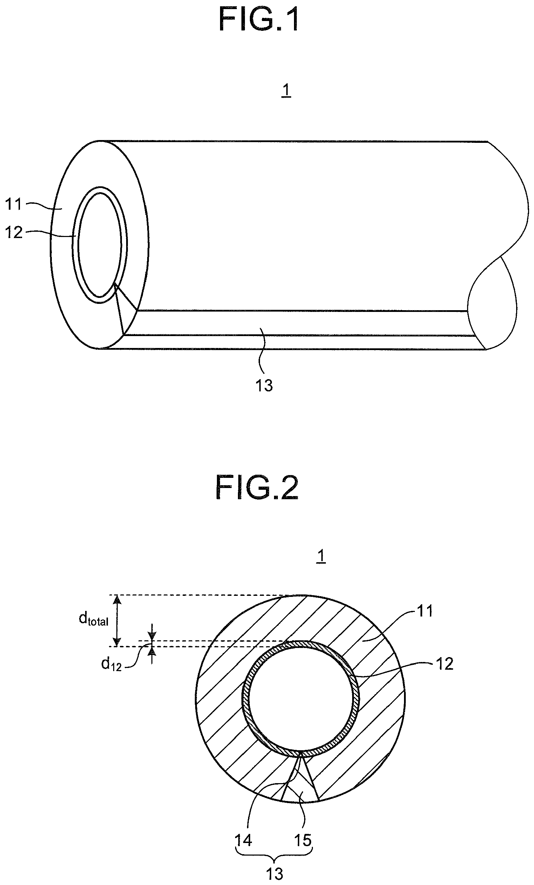

FIG. 1 is a perspective view illustrating an external appearance of a clad pipe according to a first embodiment of the present invention. FIG. 2 is a transversal cross-sectional view of a structure of the clad pipe illustrated in FIG. 1. As illustrated in FIGS. 1 and 2, a clad pipe 1 according to the first embodiment includes: a tubular member (a first tubular member) 11; and a tubular inner circumferential cladding layer (a second tubular member) 12 formed on the inner circumferential surface of the tubular member 11. In a part of the clad pipe 1, a joint part 13 extending in the longitudinal direction is provided. The cross-sectional shape of the clad pipe 1 is not particularly limited. The cross-sectional shape may be a ring, as illustrated in FIG. 2, or may be a flattened ring or a polygon such as a rectangle, a hexagon, or the like.

The tubular member 11 and the inner circumferential cladding layer 12 are formed by using mutually-different types of metal and/or alloy. The combination of metal and/or alloy to structure the tubular member 11 and the inner circumferential cladding layer 12 are not particularly limited. Specific examples of the combinations include: carbon steel or stainless steel and nickel or nickel alloy; carbon steel or stainless steel and aluminum or aluminum alloy; carbon steel or stainless steel and copper or copper alloy; carbon steel or stainless steel and titanium or titanium alloy; aluminum or aluminum alloy and nickel or nickel alloy; aluminum or aluminum alloy and copper or copper alloy; aluminum or aluminum alloy and titanium or titanium alloy; and copper or copper alloy and titanium or titanium alloy. In this situation, the carbon steel is steel which is made of alloy of iron and carbon whose carbon content (percentage by mass) is 0.6% or lower.

Among these combinations, which one is used for forming the tubular member 11 and which one is used for forming the inner circumferential cladding layer 12 shall be determined as appropriate in accordance with the purpose of use of the clad pipe 1. For example, when the clad pipe 1 is manufactured for the purpose of conducting corrosive fluid (liquid or gas) for a chamber structuring a semiconductor manufacturing device, it is desirable to form the tubular member 11 by using stainless steel and to form the inner circumferential cladding layer 12 that is in contact with the fluid by using nickel. As another example, when the clad pipe 1 is manufactured for the purpose of conducting seawater in a seawater desalination plant or the like, it is desirable to form the tubular member 11 by using carbon steel for the purpose of ensuring the strength thereof and to form the inner circumferential cladding layer 12 by using stainless steel for the purpose of achieving anti-corrosion characteristics.

The thickness d₁₂ of the inner circumferential cladding layer 12 in the radial direction is at least 50 µm. Further, the thickness d₁₂ is preferably equal to or smaller than one third of the thickness dₜₒₜₐₗ of the clad pipe 1 in the radial direction.

At least one selected from between the tubular member 11 and the inner circumferential cladding layer 12 is formed by implementing a cold spray method that uses the other of the two as a base member. As explained later, in the first embodiment, the inner circumferential cladding layer 12 is formed by implementing the cold spray method.

In this situation, the cold spray method is a method of forming cladding on the surface of a base member by which the material powder is injected from a nozzle (of which the diameter increases in the passage direction) called a Laval nozzle together with inert gas in a state of being equal to or lower than the melting point or the softening point so that the material powder collides with the base member while being in a solid phase state. According to the cold spray method, because the cladding forming process is performed at temperatures lower than those used in thermal spraying methods, impacts of thermal stress are mitigated. Consequently, it is possible to obtain cladding of metal or alloy while phase transformation is prevented and oxidization is suppressed. In particular, when the materials of both the base member and the cladding are metal or alloy, as in the first embodiment, a phenomenon called an anchoring effect may be observed where, when the material powder of the metal or the alloy collides with the base member (or a previously-formed cladding), a plastic deformation occurs between the powder and the base member so that the material of the cladding digs into the base member. The region which is formed by such an anchoring effect and in which the cladding material bites into the base member is called an anchor layer. In such an anchor layer, because an oxide film of both the base member and the cladding are destructed and because the fresh surfaces have a metallic bond with each other, it is possible to obtain a laminated member having high adhesion strength.

The joint part 13 is a trace of the joining between the tubular member 11 and the inner circumferential cladding layer 12 realized by implementing a joining method using a fusion welding process (which is a welding process in a narrower sense) such as arc welding, gas welding, plasma welding, or the like, a soldering process, a friction stir welding process, or the like. In the first embodiment, the tubular member 11 and the inner circumferential cladding layer 12 are joined with each other by performing a fusion welding process using a filler material. For this reason, the joint part 13 has a two-layer structure including a joint part 14 positioned on the inner circumferential side and a joint part 15 positioned on the outer circumferential side. The joint part 14 positioned on the inner circumferential side may be somewhat bulging toward the outer circumferential side (i.e., the joint part 15 side) compared to the outer circumferential surface of the other part of the inner circumferential cladding layer 12.

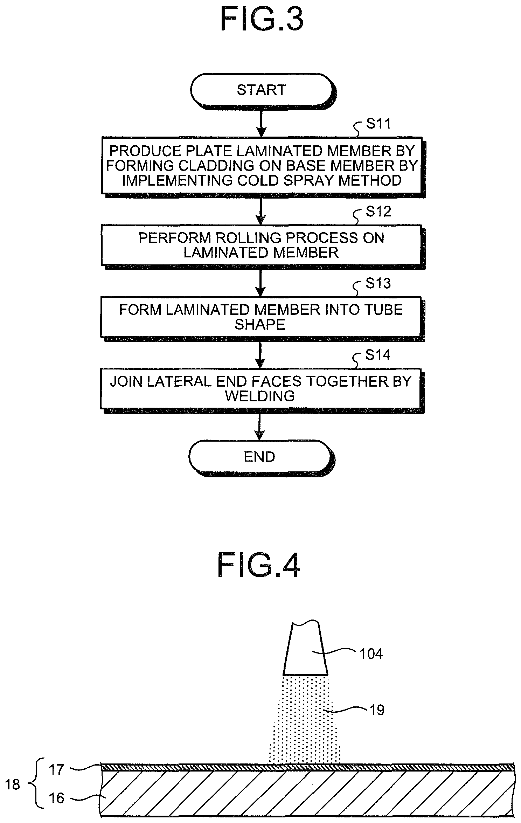

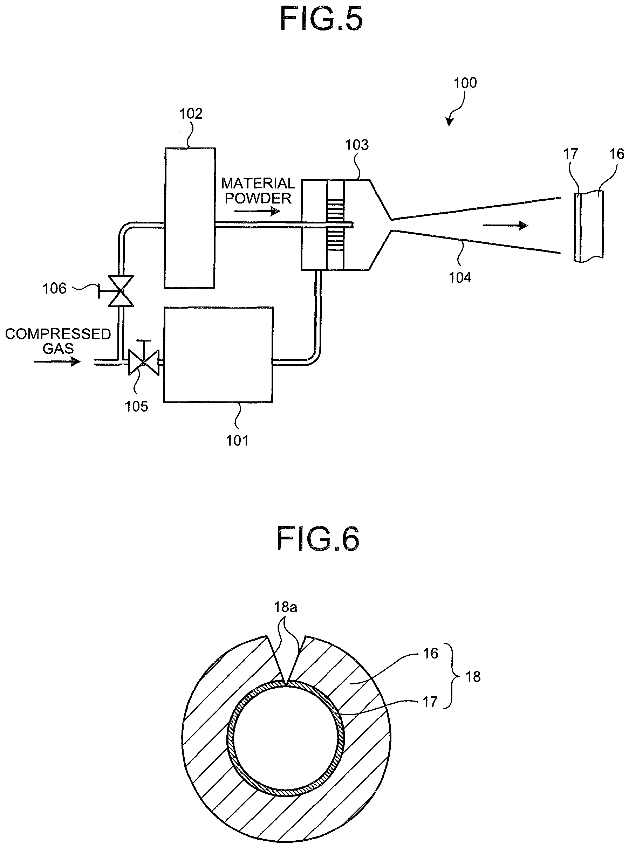

Next, a method of manufacturing the clad pipe 1 according to the first embodiment will be explained. FIG. 3 is a flowchart illustrating the method of manufacturing the clad pipe 1. FIGS. 4, 6, and 7 are schematic drawings for explaining the method of manufacturing the clad pipe 1. FIG. 5 is a schematic drawing illustrating an exemplary configuration of a cladding forming device implementing the cold spray method.

First, at step S11, as illustrated in FIG. 4, a plate laminated member 18 is produced by forming a cladding 17 on a base member 16 by implementing the cold spray method. The base member 16 is the part becoming the tubular member 11 of the clad pipe 1. For example, when the tubular member 11 is formed by using stainless steel, a rectangular plate member formed of stainless steel is prepared as the base member 16. The method of manufacturing the stainless steel plate member is not particularly limited. The plate member may be a rolled plate member or may be a plate member produced by implementing the cold spray method. The thickness of the base member 16 in the radial direction is determined as appropriate in accordance with the purpose of use of the clad pipe 1.

Further, the cladding 17 is the part becoming the inner circumferential cladding layer 12. When the inner circumferential cladding layer 12 is formed by using nickel, for example, the cladding 17 is formed by implementing the cold spray method while using nickel powder as a material.

A cold spray device 100 illustrated in FIG. 5 includes: a gas heater 101 that heats compressed gas; a powder supply device 102 that contains material powder 19 of the cladding 17 therein and supplies the material powder 19 to a spray gun 103; a gas nozzle 104 that injects the powder 19 supplied to the spray gun 103 toward the base member 16, together with the heated compressed gas; and valves 105 and 106 that adjust the amounts of the compressed gas to be supplied to the gas heater 101 and to the powder supply device 102, respectively.

Helium, nitrogen, air, or the like may be used as the compressed gas. The compressed gas supplied to the gas heater 101 is heated to a temperature in a range lower than the melting point of the material powder 19 and is subsequently supplied to the spray gun 103. The heating temperature of the compressed gas may preferably in the range of 300 °C to 1,000 °C.

In contrast, the compressed gas supplied to the powder supply device 102 is used for supplying the powder 19 within the powder supply device 102 to the spray gun 103 by a predetermined discharge amount.

The heated compressed gas is injected in an ultrasonic jet flow (approximately 340 m/s or higher) as passing through the gas nozzle 104 shaped so that the diameter thereof increases in the passage direction. It is preferable to arrange the gas pressure of the compressed gas in this situation to be approximately 1 MPa to 5 MPa. The reason is that, by adjusting the pressure of the compressed gas to be at such a level, it is possible to improve the strength of the adhesion of the cladding 17 to the base member 16. It is more preferable to perform the processing under pressure in the range of approximately 2 MPa to 5 MPa.

In the cold spray device 100 configured as described above, while the base member 16 (e.g., a stainless steel plate) is positioned so as to face the spray gun 103, the material powder (e.g., nickel powder) 19 of the cladding 17 is fed into the powder supply device 102, and the compressed gas started being supplied to the gas heater 101 and to the powder supply device 102. As a result, the powder 19 supplied to the spray gun 103 is fed into the supersonic jet flow of the compressed gas and accelerated so as to be injected from the spray gun 103. The cladding 17 is formed as a result of the powder 19 colliding with the base member 16 at a high speed and depositing, while remaining in a solid phase state. As a result of the collision at this time, an anchor layer is formed on the boundary surface between the base member 16 and the cladding 17, so that the cladding 17 strongly adheres to the base member 16. At step S11, the powder material is deposited until the cladding 17 has a desired thickness.

As for the cladding forming device implementing the cold spray method, as long as the device is able to form the cladding 17 by causing the material powder 19 to collide onto the base member 16 while the material powder 19 is in a solid phase state, possible configurations of the cladding forming device are not limited to the configuration of the cold spray device 100 illustrated in FIG. 5.

In the subsequent step at step S12, a rolling process is performed on the laminated member 18 obtained by forming the cladding 17 on the base member 16. The rolling process is performed for the purpose of smoothing the surface of the cladding 17, as well as increasing the density of the cladding 17 and fine-tuning the thickness of the laminated member 18. For this reason, there is no need to pull and stretch the laminated member 18 to a large extent by repeatedly performing the process, unlike in the known rolling process. For example, it is sufficient to apply pressure to such an extent that reduces the thickness of the laminated member 18 by 50% at most.

In the subsequent step at step S13, lateral end faces 18a of the laminated member 18 opposing each other are each cut at an angle, the laminated member 18 having the rectangular plate shape. As illustrated in FIG. 6, the laminated member 18 is formed into a tube shape by using a roll forming machine, so that these lateral end faces 18a face each other. In this situation, the forming process is performed so that the cladding 17 is positioned on the inner circumferential side. When the lateral end faces 18a are cut, the lateral end faces 18a are arranged to be at an angle in such a manner that the outer circumferential surface (the surface of the base member 16) is short relative to the inner circumferential surface (the surface of the cladding 17). As a result, when the laminated member 18 is formed into the tube shape, a V-shaped groove opening toward the outer circumferential side is formed.

In the subsequent step at step S14, the lateral end faces 18a opposing each other in the laminated member 18 formed into the tube shape are joined with each other. The joining method used at step S14 is not particularly limited. It is possible to use any of wellknown methods including a fusion welding process (which is a welding process in a narrower sense) such as arc welding, gas welding, plasma welding, or the like, a soldering process, a friction stir welding process, and the like. The filler material used for the fusion welding process and the solder material used for the soldering process may be selected as appropriate in accordance with the materials to be joined together.

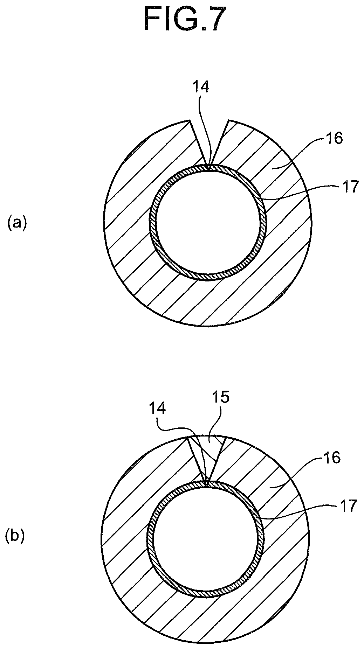

In one example, when the joining process is realized with a fusion welding process, at first, as illustrated in a part (a) of FIG. 7, the lateral end faces of the cladding 17 are joined with each other (see the joint part 14) by using a filler material configured with the same material (e.g., nickel) as that of the cladding 17. Subsequently, as illustrated in a part (b) of FIG. 7, the lateral end faces of the base member 16 are joined with each other (see the joint part 15) by using a filler material configured with the same material (e.g., stainless steel) as that of the base member 16. The clad pipe 1 illustrated in FIG. 1 is thus completed.

As explained above, according to the first embodiment, the clad pipe 1 formed of the two layers is manufactured by forming the laminated member 18, which is obtained by forming the cladding 17 on the base member 16 by using the cold spray method, into the tube shape and further joining the lateral end faces 18a with each other. Accordingly, it is possible to achieve a high level of adhesion between the tubular member 11 and the inner circumferential cladding layer 12. Consequently, it is possible to manufacture the clad pipe 1 having durability to last through a long-term use.

Further, in the first embodiment, as explained above, the rolling process is performed just for the purpose of smoothing the surface of the cladding 17, increasing the density of the cladding 17, and fine-tuning the thickness of the laminated member 18. Accordingly, unlike in the known techinique, there is no need to pull and stretch the laminated member 18 to a large extent by performing a rolling process multiple times for the purpose of enhancing the adhesion between the layers. For this reason, even when the mechanical characteristics such as malleability, ductility, and/or the like are significantly different between the base member 16 and the cladding 17, it is possible to prevent the occurrence of warping that may be caused by the repeatedly-performed rolling process. Further, there is no need to regulate the balance between the thickness of the base member 16 and the thickness of the cladding 17, for the purpose of preventing the occurrence of warping that may be caused by the rolling process. Accordingly, it is possible to make the degree of freedom significantly higher than that in the known technique, in terms of combinations of the materials of the base member 16 and the cladding 17 (the tubular member 11 and the inner circumferential cladding layer 12) and combinations of the thicknesses thereof.

For example, in the known technique, to prevent the occurrence of warping that may be caused by a stretching process, it would be difficult to arrange the proportion of the thickness d₁₂ of the cladding 17, i.e., the inner circumferential cladding layer 12 in the radial direction to the thickness dₜₒₜₐₗ of the laminated member 18, i.e., the clad pipe 1 in the radial direction to be equal to or smaller than 1/3. In contrast, according to the first embodiment, it is possible to produce the laminated member 18 in which the base member 16 and the cladding 17 have thicknesses that are significantly different from each other, without causing any warping.

Further, in the first embodiment, by using the cold spray method, it is possible to form the inner circumferential cladding layer 12 of which the thickness d₁₂ is equal to or larger than 50 µm, which would be difficult with a plating method. Accordingly, it is possible to improve the durability of the inner circumferential cladding layer 12 to last through a long-term use. Further, it is possible to prevent the occurrence of pits, which are prone to occur when a plating method is used. It is therefore possible to prevent the occurrence of erosion caused by pits.

In the first embodiment described above, the clad pipe 1 formed of the two layers is produced; however, it is also acceptable to produce a clad pipe having three or more layers. In that situation, a laminated member obtained by forming multiple layers on the base member 16 by implementing the cold spray method is formed into a tube shape, and the lateral end faces of the layers are joined with each other by performing a fusion welding process, a soldering process, a friction stir welding process, or the like.

### (A modification example)

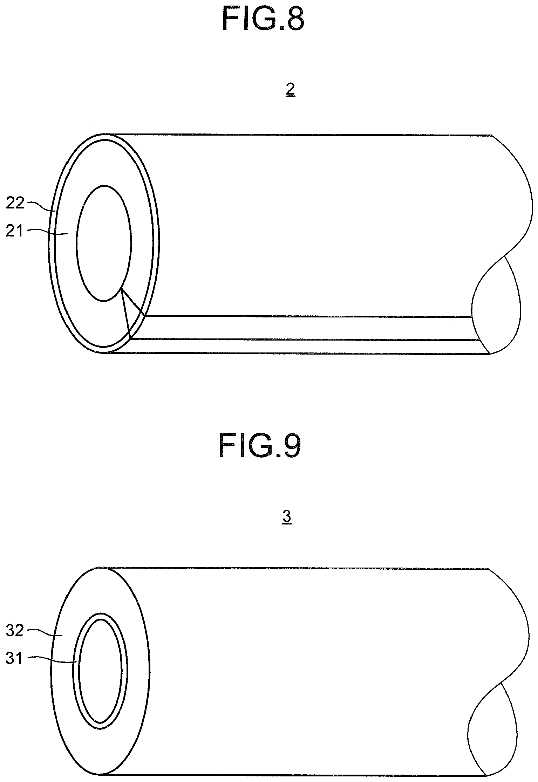

Next, a modification example of the first embodiment of the present invention will be explained. FIG. 8 is a perspective view illustrating a clad pipe according to the present modification example.

In the first embodiment described above, the laminated member 18 is formed into the tube shape, so that the cladding 17 is positioned on the inside (the base member 16 is positioned on the outside). It is, however, also acceptable to form the laminated member 18 into a tube shape so that, on the contrary, the cladding 17 is positioned on the outside (the base member 16 is positioned on the inside). In that situation, as illustrated in FIG. 8, it is possible to produce a clad pipe 2 formed of a tubular member 21 obtained by forming the base member 16 into a tube shape and an outer circumferential cladding layer 22 provided on the outer circumferential surface of the tubular member 21.

As explained above, the direction in which the laminated member 18 produced by implementing the cold spray method is formed into a tube shape may be determined as appropriate in accordance with the purpose of use of the clad pipe, the functions or the like which the cladding 17 is required to have (e.g., anti-corrosion characteristics, decorative quality, etc.).

### (Second Embodiment)

Next, a second embodiment of the present invention will be explained. FIG. 9 is a perspective view illustrating an external appearance of a clad pipe according to a second embodiment of the present invention. As illustrated in FIG. 9, a clad pipe 3 according to the second embodiment includes a tubular member (a second tubular member) 31 and a tubular outer circumferential cladding layer (a first tubular member) 32 formed on the outer circumferential surface of the tubular member 31. The cross-sectional shape of the clad pipe 3 is not particularly limited. The cross-sectional shape may be a ring, as illustrated in FIG. 9, or may be a flattened ring or a polygon such as a rectangle, a hexagon, or the like.

The tubular member 31 and the outer circumferential cladding layer 32 are formed by using mutually-different types of metal and/or alloy. Possible combinations of the materials of the tubular member 31 and the outer circumferential cladding layer 32 are the same as those listed in the first embodiment. Among those combinations, which one is used for forming the tubular member 31 and which one is used for forming the outer circumferential cladding layer 32 shall be determined as appropriate in accordance with the purpose of use of the clad pipe 3.

The thickness of the tubular member 31 in the radial direction is at least 50 µm. Further, the thickness is preferably equal to or smaller than one third of the thickness of the clad pipe 3 in the radial direction.

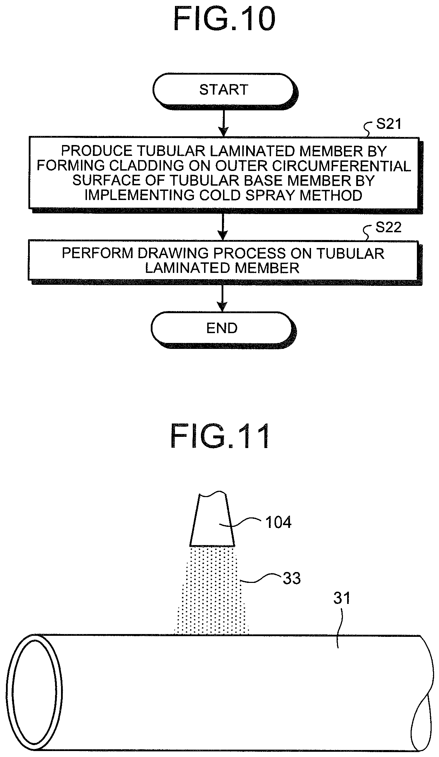

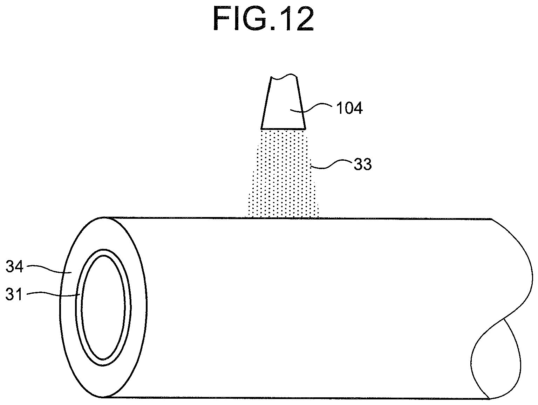

Next, a method of manufacturing the clad pipe 3 according to the second embodiment will be explained. FIG. 10 is a flowchart illustrating the method of manufacturing the clad pipe 3. FIGS. 11 and 12 are schematic drawings for explaining the method of manufacturing the clad pipe 3.

At step S21, a tubular laminated member is produced by forming a cladding on the outer circumferential surface of a tubular base member by implementing the cold spray method. As illustrated in FIG. 11, as the tubular base member, the tubular member 31 itself is used. Further, as material powder 33 used in the cold spray method, powder of the metal or the alloy used for structuring the outer circumferential cladding layer 32 is prepared. For example, when the tubular member 31 is formed by using nickel, whereas the outer circumferential cladding layer 32 is formed by using stainless steel, a stainless steel cladding is formed by spraying stainless steel powder onto the outer circumferential surface of a nickel pipe.

By feeding the powder 33 into the powder supply device 102 (see FIG. 5) and having the powder 33 injected from the gas nozzle 104 and sprayed onto the tubular member 31 serving as the base member, a cladding 34 is deposited on the outer circumferential surface of the tubular member 31, as illustrated in FIG. 12. As a result of the collision occurring when the powder 33 is sprayed onto the tubular member 31, an anchor layer is formed on the boundary surface between the tubular member 31 and the cladding 34. The cladding 34 therefore strongly adheres to the tubular member 31.

In the subsequent step at step S22, a drawing process is performed on the tubular laminated member obtained by forming the cladding 34 on the tubular member 31 serving as the base member. The drawing process is performed for the purpose of smoothing the surface of the cladding 34, as well as increasing the density of the cladding 34 and fine-tuning the thickness of the cladding 34. For this reason, there is no need to repeatedly perform the process, unlike the drawing process in the known technique. Further, it is sufficient to apply pressure to such an extent that reduces the thickness of the tubular laminated member by 50% at most. The clad pipe 3 illustrated in FIG. 9 is thus completed.

As explained above, according to the second embodiment, the cladding is formed on the outer circumferential surface of the tubular base member by implementing the cold spray method. It is therefore possible to produce the clad pipe 3 that has no seam such as a trace of the joining process.

### Reference Signs List

1, 2, 3 CLAD PIPE
11, 21, 31 TUBULAR MEMBER
12 INNER CIRCUMFERENTIAL CLADDING LAYER
13, 14, 15 JOINT PART
16 BASE MEMBER
17, 34 CLADDING
18 LAMINATED MEMBER
18a LATERAL END FACES
19 POWDER
22, 32 OUTER CIRCUMFERENTIAL CLADDING LAYER
33 POWDER
100 COLD SPRAY DEVICE
101 GAS HEATER
102 POWDER SUPPLY DEVICE
103 SPRAY GUN
104 GAS NOZZLE
105, 106 VALVE

## Claims

1. A clad pipe comprising:
a first tubular member formed of first metal or alloy; and
a second tubular member provided on an inner circumferential surface of the first tubular member, and formed of a second metal or alloy of a different type from the first metal or alloy, a thickness of the second tubular member in a radial direction being at least 50 µm, wherein
on a boundary surface where the first tubular member and the second tubular member are in contact with each other, an anchor layer is formed in which a material of one of the first and the second tubular members digs into a material of another tubular member.

2. The clad pipe according to claim 1, wherein a proportion of the thickness of the second tubular member in the radial direction to a thickness of the clad pipe in the radial direction is equal to or smaller than 1/3.

3. The clad pipe according to claim 1 or 2, wherein
the second tubular member is formed by spraying, together with gas, and depositing powder of the material onto the first tubular member while the powder remains in a solid phase state,
the first tubular member is provided with a joint part formed of the first metal or alloy and extending in a longitudinal direction, and
the second tubular member is provided with a joint part formed of the second metal or alloy and extending in a longitudinal direction.

4. The clad pipe according to claim 1 or 2, wherein the first tubular member is formed by spraying, together with gas, and depositing powder of the material onto the second tubular member while the powder remains in a solid phase state.

5. The clad pipe according to any one of claims 1 to 4, wherein a combination of the first metal or alloy and the second metal or alloy is:
carbon steel or stainless steel and nickel or nickel alloy;
carbon steel or stainless steel and aluminum or aluminum alloy;
carbon steel or stainless steel and copper or copper alloy;
carbon steel or stainless steel and titanium or titanium alloy;
aluminum or aluminum alloy and nickel or nickel alloy;
aluminum or aluminum alloy and copper or copper alloy;
aluminum or aluminum alloy and titanium or titanium alloy; or
copper or copper alloy and titanium or titanium alloy.

6. A clad pipe manufacturing method comprising:
a laminated member producing step of producing a plate laminated member by spraying, together with gas, and depositing powder onto a plate base member formed of a first metal or alloy while the powder remains in a solid phase state, the powder being formed of a second metal or alloy of a different type from the first metal or alloy;
a tube shape forming step of forming the laminated member into a tube shape; and
a joining step of joining, with each other, lateral end faces opposing each other in the laminated member formed into the tube shape.

7. The clad pipe manufacturing method according to claim 6, further comprising: a rolling step of performing a rolling process on the plate laminated member, wherein
the tube shape forming step forms the plate laminated member on which the rolling process has been performed into the tube shape.

8. The clad pipe manufacturing method according to claim 6 or 7, wherein the tube shape forming step forms the laminated member such that the base member is positioned on an outside.

9. The clad pipe manufacturing method according to claim 6 or 7, wherein the tube shape forming step forms the laminated member such that the base member is positioned on an inside.

10. The clad pipe manufacturing method according to any one of claims 6 to 9, wherein
the joining step includes:
a first joining step of joining lateral end faces of the base member with each other, by using a filler material formed of the first metal or alloy; and
a second joining step of joining, with each other, lateral end faces of a deposited layer that deposited on the base member and is formed of the second metal or alloy, by using a filler material formed of the second metal or alloy.

11. A clad pipe manufacturing method comprising:
a laminated member producing step of producing a tubular laminated member by spraying, together with gas, and depositing powder onto an outer circumferential surface of a tubular base member formed of a first metal or alloy while the powder remains in a solid phase state, the powder being formed of a second metal or alloy of a different type from the first metal or alloy; and
a drawing step of performing a drawing process on the tubular laminated member.
